# EUROPEAN PATENT APPLICATION

(11) **EP 2 363 573 A1**
(43) Date of publication of application: **07.09.2011**
(21) Application number: 11155546.2
(22) Date of filing: 23.02.2011
(51) Int. Cl.: E21B 33/12, E21B 33/134, C09K 8/42

(54) **Sealant for forming durable plugs in wells and methods for completing or abandoning wells**

(30) Priority: 24.02.2010 US 711639
(71) Applicant: Wild Well Control, Inc., Houston, TX 77073 (US)
(72) Inventor: Murphy, Christopher John, Houston, TX 77073 (US); Hoffman, Corey Eugene, Plantersville, TX 77363 (US); Watters, Larry, Spring, TX 77373 (US); Sabins, Fred, Montgomery, TX 77316 (US); Watters, Jeffrey, Cypress, TX 77429 (US); Sonnier, Paul L., Kingwood, TX 77339 (US)
(74) Representative: Kling, Simone

(57) **Abstract**

Embodiments of the present invention generally relate to a sealant for forming durable plugs in wells and method for completing or abandoning wells. In one embodiment, a method of plugging a wellbore includes mixing sealant; mixing cement; pumping the cement and sealant into the wellbore. The cement is above the sealant and the sealant cures to become viscoelastic or semisolid.

## Description

### BACKGROUND OF THE INVENTION

### Field of the Invention

Embodiments of the present invention generally relate to a sealant for forming durable plugs in wells and methods for completing or abandoning wells.

### Description of the Related Art

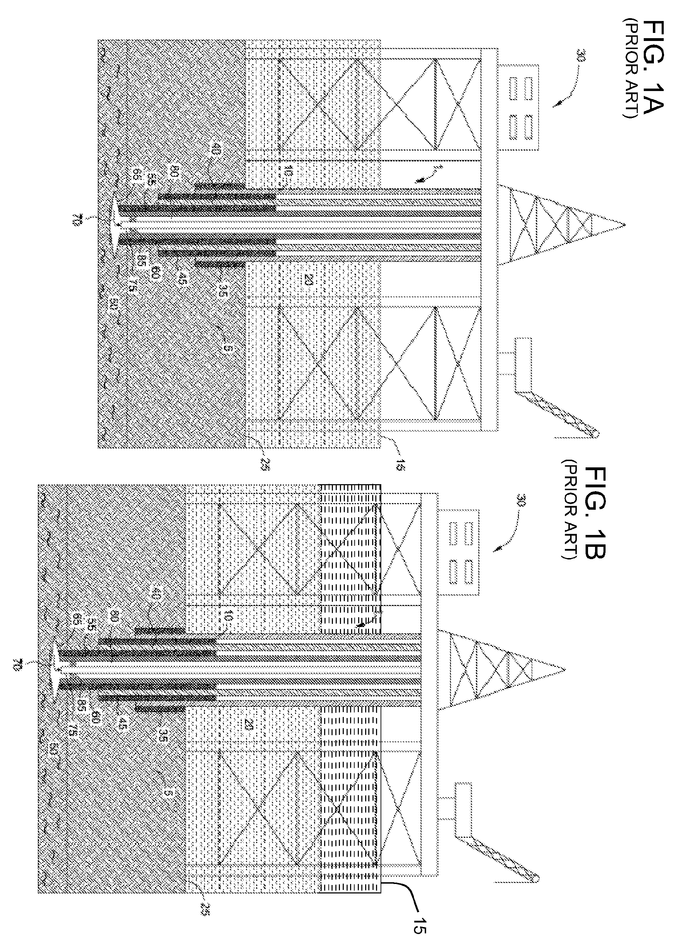

Figure 1A is a cross section of a prior art sub-sea wellbore 5 drilled and completed with a land-type completion 1. A conductor casing string 10 may be set from above sea-level 15, through the sea 20, and into the sea-floor or mudline 25. The conductor casing 10 allows the wellhead (not shown) to be located on a production platform 30 above sea-level 15 rather than on the sea-floor 25. Alternatively, the platform 30 may service a subsea-type completion or a manifold from multiple subsea-type completions.

Once the conductor casing 10 has been set and cemented 35 into the wellbore 5, the wellbore 5 may be drilled to a deeper depth. A second string of casing, known as surface casing 40, may then be run-in and cemented 45 into place. As the wellbore 5 approaches a hydrocarbon-bearing formation 50, i.e., crude oil and/or natural gas, a third string of casing, known as production casing 55, may be run-into the wellbore 5 and cemented 60 into place. Thereafter, the production casing 55 may be perforated 65 to permit the fluid hydrocarbons 70 to flow into the interior of the casing. The hydrocarbons 70 may be transported from the production zone 50 of the wellbore 5 through a production tubing string 75 run into the wellbore 5. An annulus 80 defined between the production casing 55 and the production tubing 75 may be isolated from the producing formation 50 with a packer 85.

Additionally, a stove or drive pipe may be jetted, driven, or drilled in before the conductor casing 10 and/or one or more intermediate casing strings may be run-in and cemented between the surface 40 and production 55 casing strings. The stove or drive pipe may or may not be cemented.

Figure 1B is a cross section of the platform 30 and completion 1 after subsidence due to production from the formation 50. The subsidence may be substantial, such as ten feet or tens of feet. The subsidence may also be more prevalent proximate to the formation 50 than at the sea-floor, thereby inducing stress in the casings 10, 40, 55 and fracturing the brittle cement sections 35, 45, 60. The wellbore 5 may have been in production for many years, thereby depleting the formation 50 such that the platform operator desires to plug and abandon the wellbore 5. However, a typical plug procedure may be futile as the subsistence may have made the casings 10, 40, 55 unstable subject to continued movement and/or the formation 50 may continue to subside even after abandonment, thereby fracturing typical abandonment plugs made from cement.

### SUMMARY OF THE INVENTION

Embodiments of the present invention generally relate to a sealant for forming durable plugs in wells and methods for completing or abandoning wells. In one embodiment, a method of completing or abandoning a wellbore includes mixing sealant; mixing cement; pumping the cement and sealant into the wellbore. The cement is above the sealant and the sealant cures to become viscoelastic or semisolid.

In another embodiment, a plug for completing or abandoning a wellbore includes a top layer comprising cement, in particular Portland cement; and a middle or bottom layer comprising a viscoelastic or semisolid sealant.

In another embodiment, a method for repairing damaged cement in a wellbore includes: forming an opening through a wall of a casing or liner cemented in the wellbore; and pumping sealant through the opening and into the damaged cement. The sealant cures to become viscoelastic or semisolid

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1A is a cross section of a prior art sub-sea wellbore drilled and completed with a land-type completion. Figure 1B is a cross section of the platform and completion after subsidence due to production from the formation.

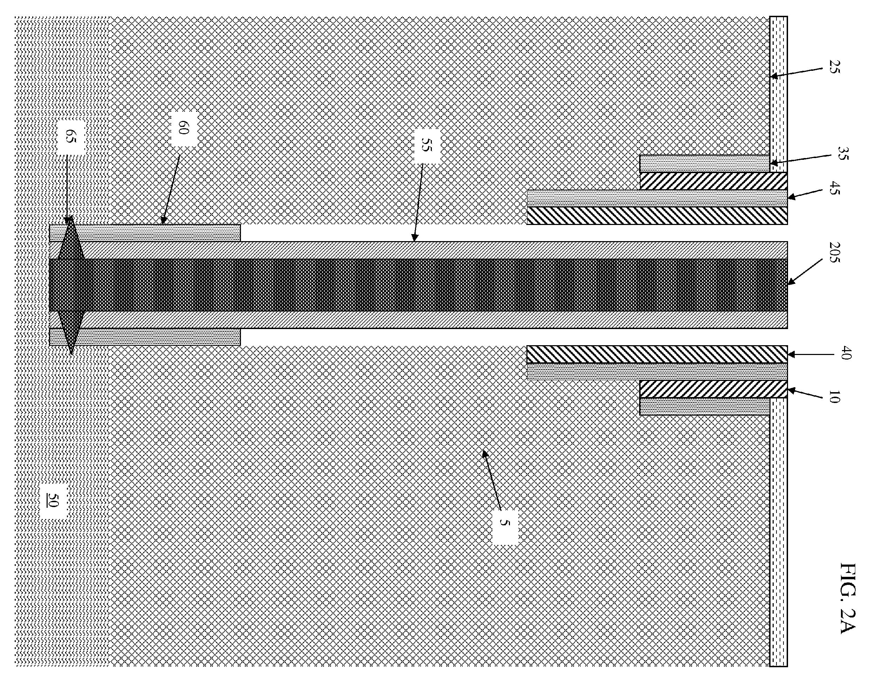

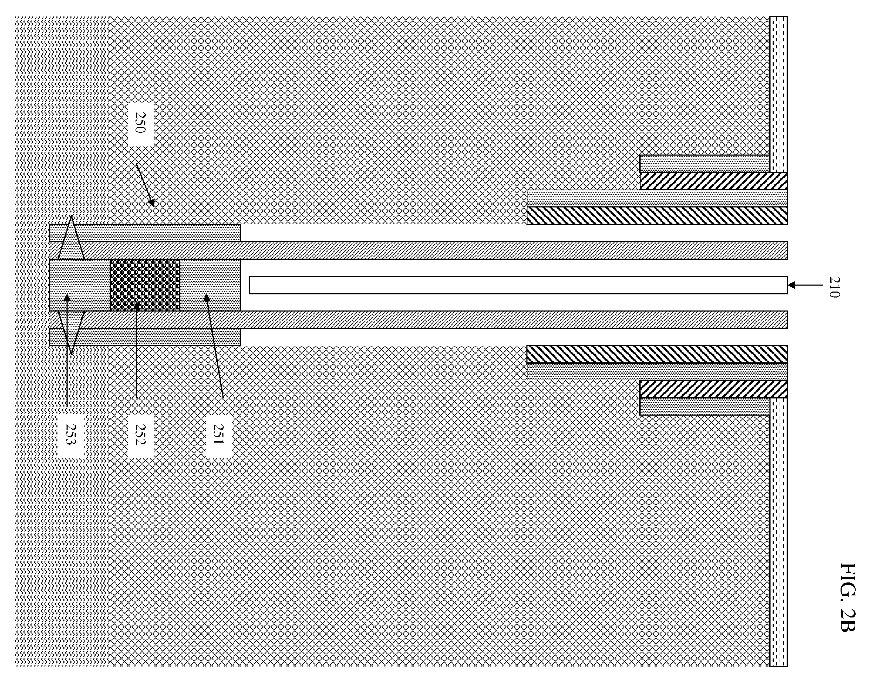

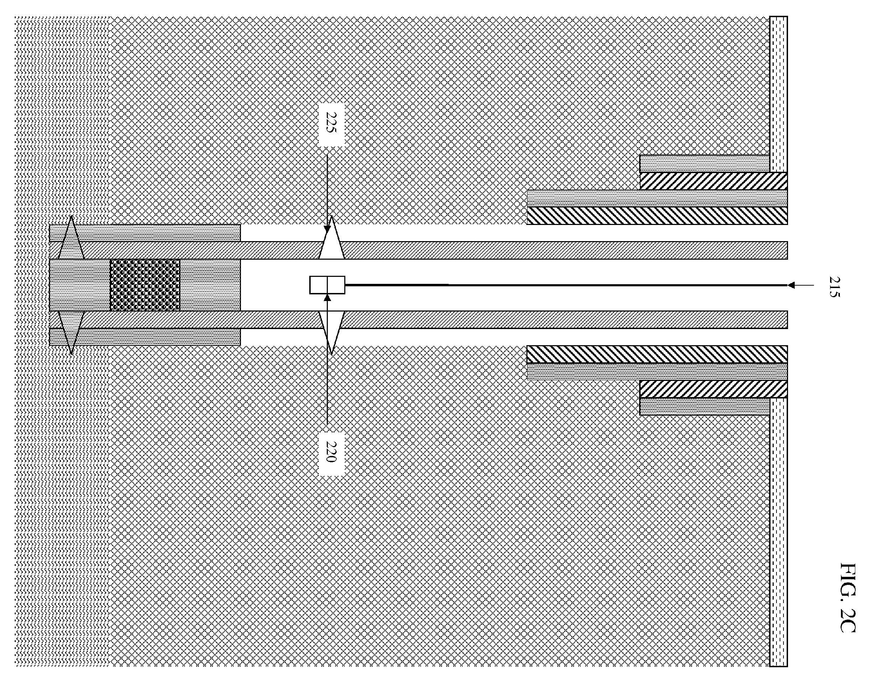

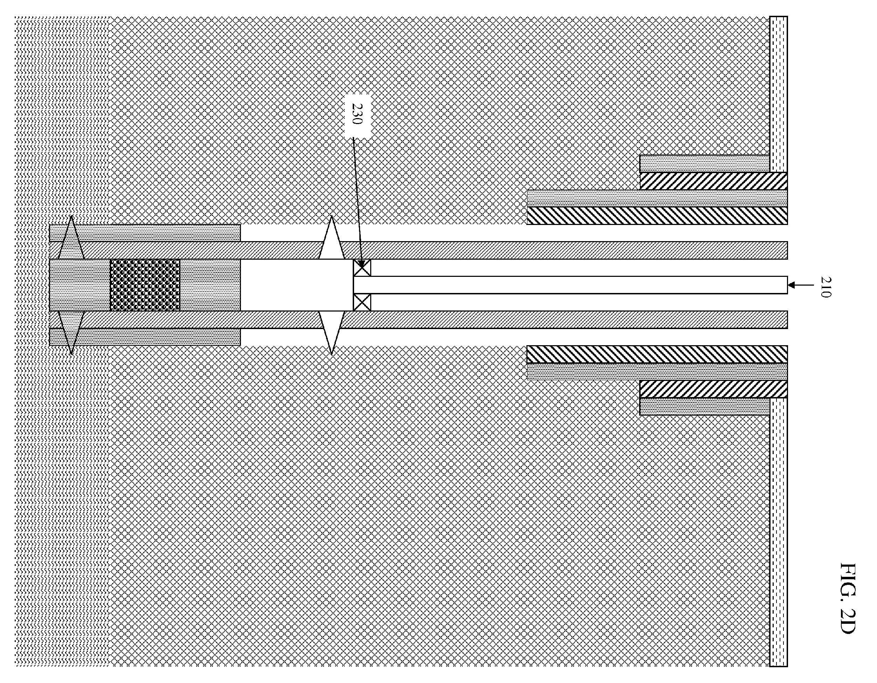

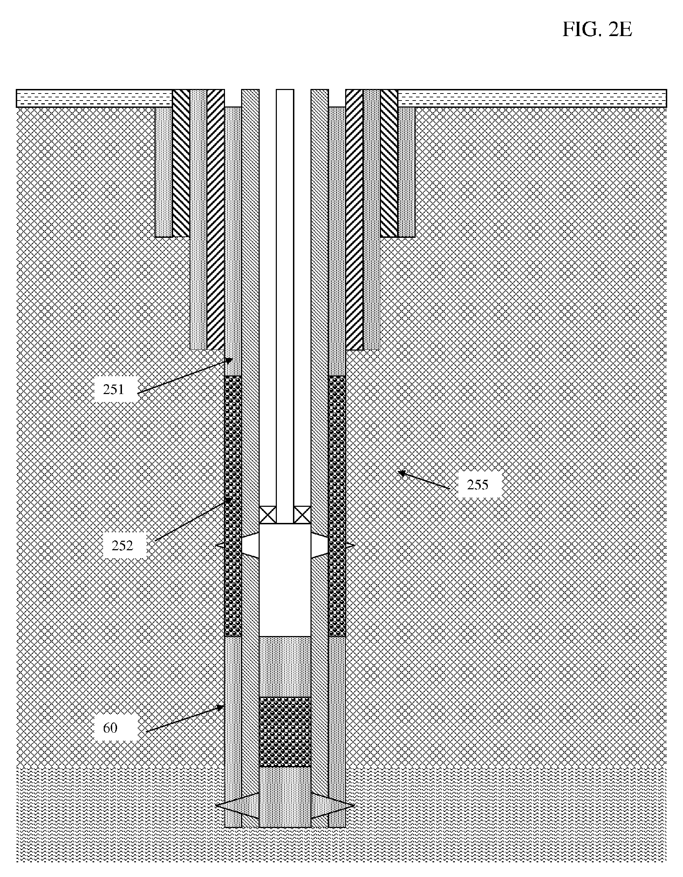

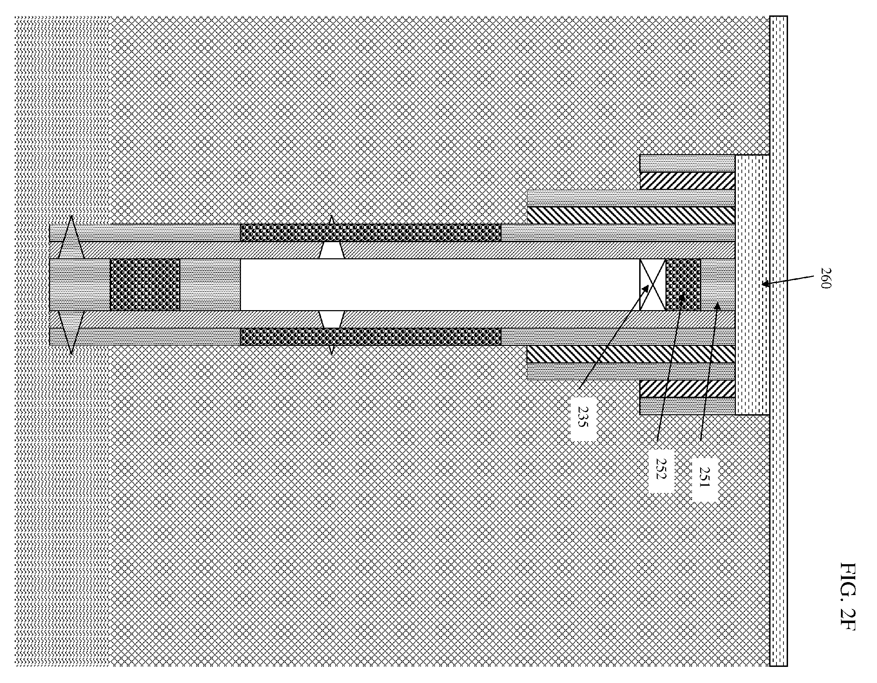

Figures 2A-F illustrate a plug and abandon (P&A) operation conducted on the subsided wellbore, according to one embodiment of the present invention. Figure 2A illustrates killing the formation. Figure 2B illustrates plugging the production casing bore by pumping in a multi-layer plug. Figure 2C illustrates perforation of the production casing. Figure 2D illustrates running of a workstring. Figure 2E illustrates plugging the production casing annulus by pumping in a multi-layer plug. Figure 2F illustrates plugging the production casing bore at or just below the mudline by setting a bridge plug and pumping in a multi-layer plug and cutting the completion.

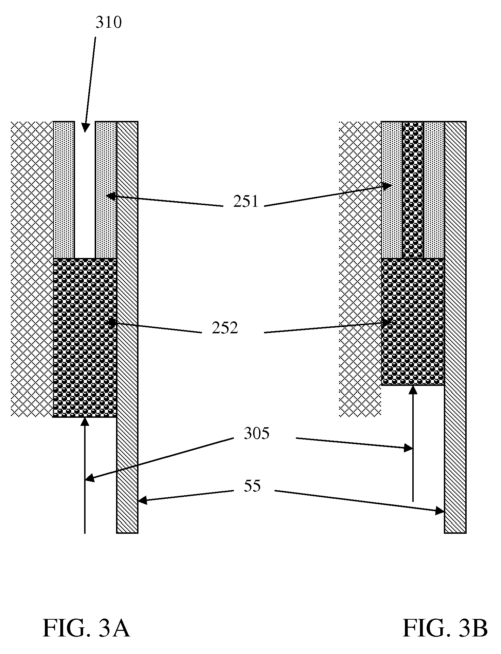

Figures 3A and 3B illustrate operation of the sealant to heal a crack formed in cement due to subsidence.

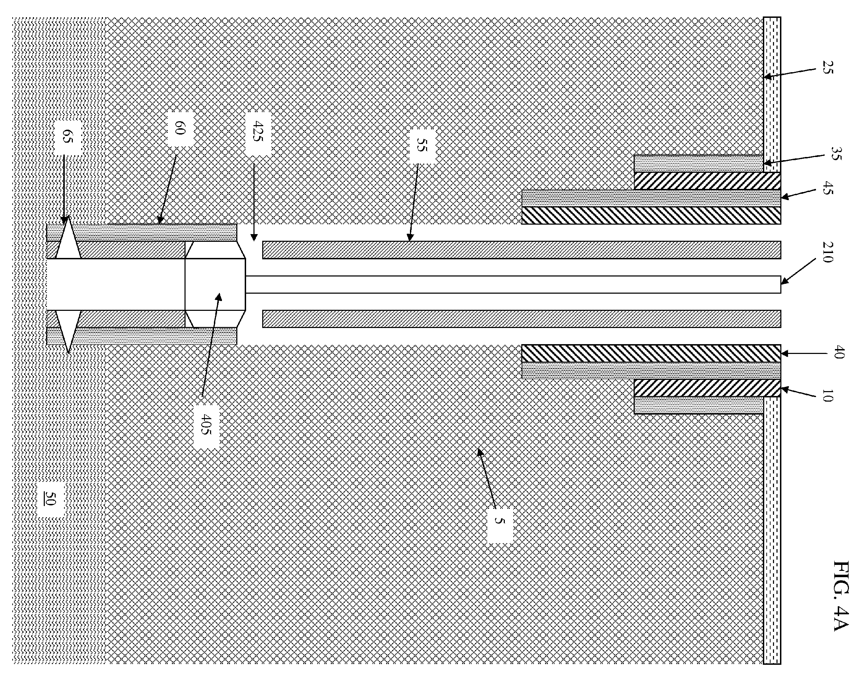

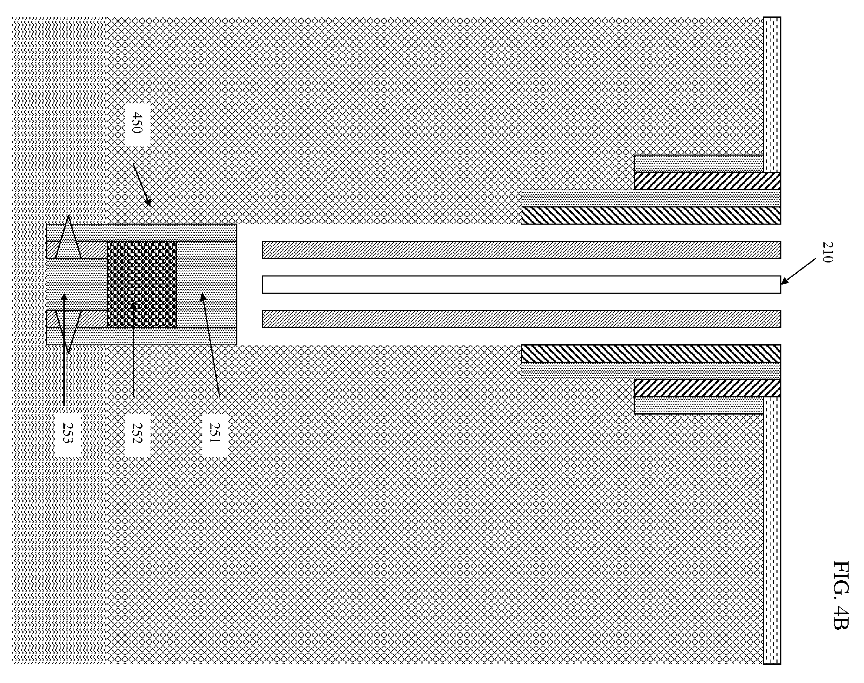

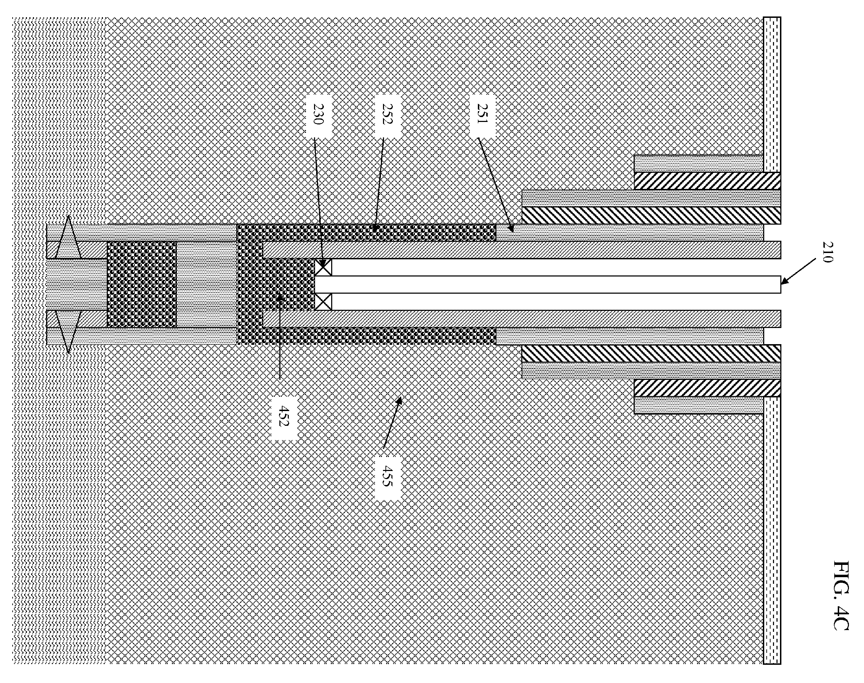

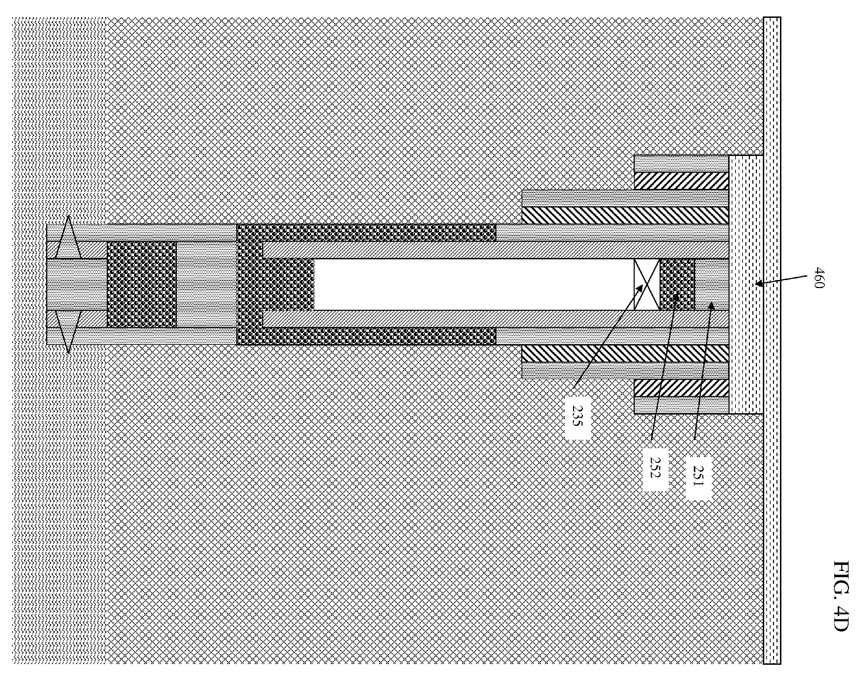

Figures 4A-D illustrate a plug and abandon (P&A) operation conducted on the subsided wellbore, according to another embodiment of the present invention. Figure 4A illustrates milling a section of the production casing. Figure 4B illustrates plugging the formation by pumping in a multi-layer plug. Figure 4C illustrates plugging the production casing annulus by pumping in a multi-layer plug. Figure 4D illustrates plugging the production casing bore at or just below the mudline by setting a bridge plug and pumping in a multi-layer plug and cutting the completion.

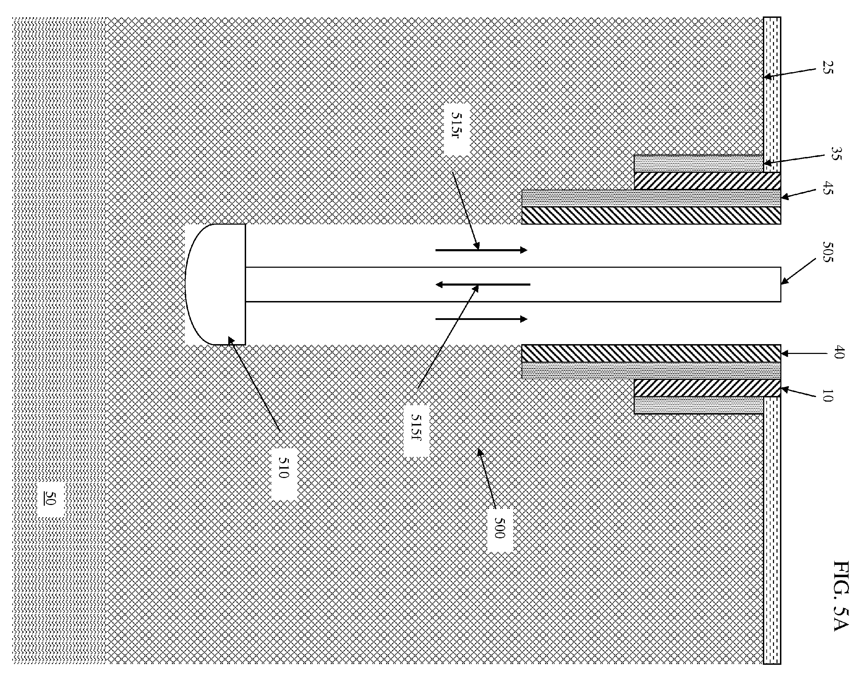

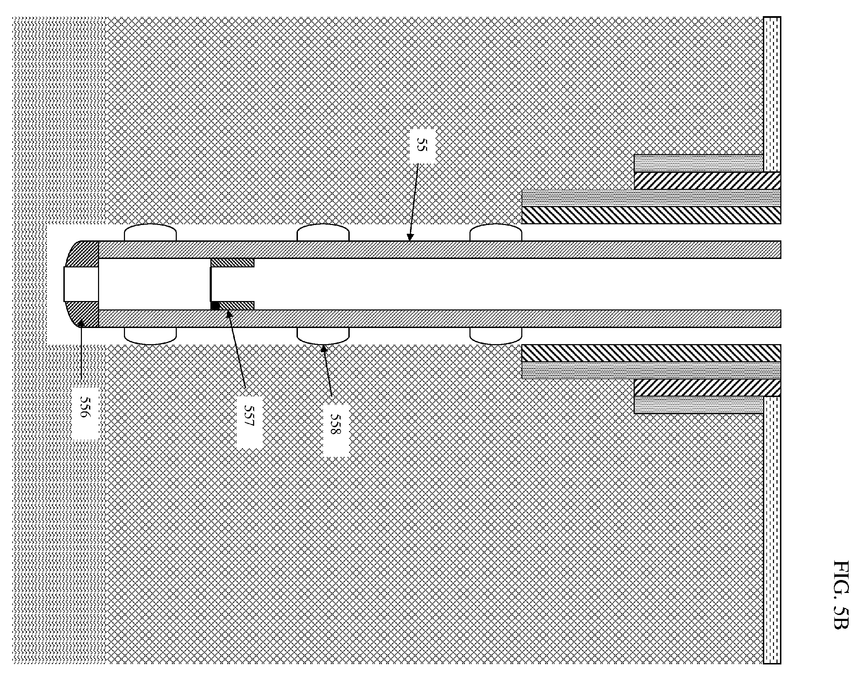

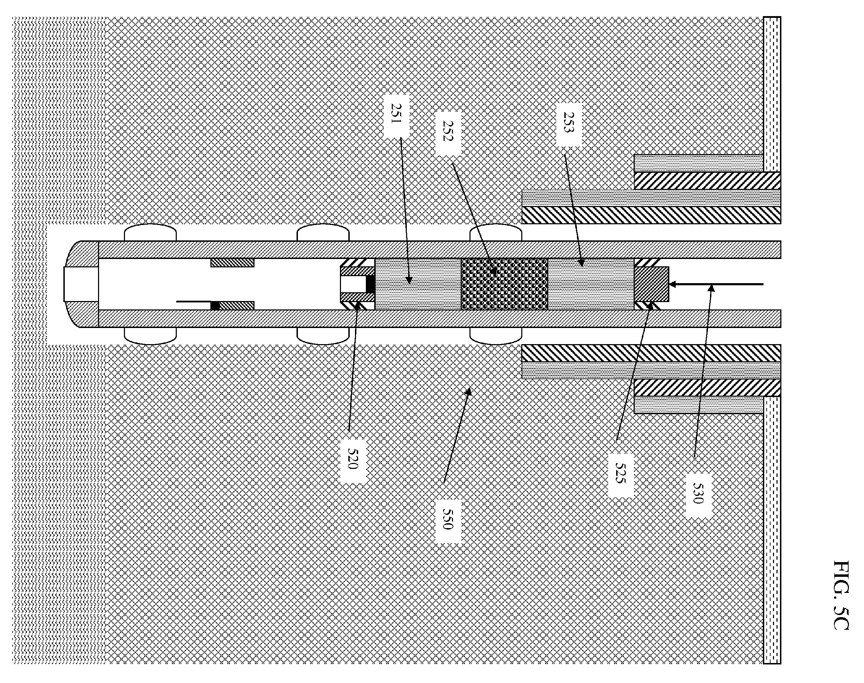

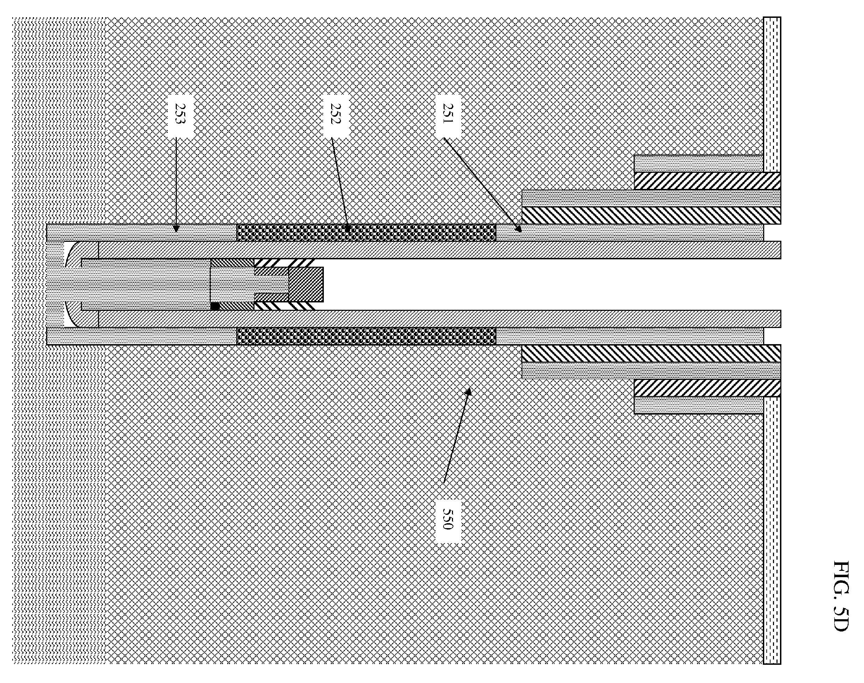

Figures 5A-D illustrate drilling and completion of a wellbore, according to another embodiment of the present invention. Figure 5A illustrates drilling the wellbore. Figure 5B illustrates a production casing assembly deployed into the wellbore. Figure 5C illustrates pumping of a multi-layer plug. Figure 5D illustrates the multi-layer plug pumped into the production casing annulus.

### DETAILED DESCRIPTION

Figures 2A-F illustrate a plug and abandon (P&A) operation conducted on the subsided wellbore 5, according to one embodiment of the present invention. Figure 2A illustrates killing the formation 50. The formation 50 may be killed by pumping in a kill fluid 205, such as seawater or mud. The production tubing 70 and packer 85 may then be removed from the wellbore 5.

Figure 2B illustrates plugging the production casing 55 bore by pumping in a multi-layer plug 250. A workstring 210, such as coiled tubing or drill pipe, may be deployed from the platform 30 to a depth proximate to the formation 50. The workstring 210 may be deployed through a bore of the production casing 55. The multi-layer plug 250 may be pumped through the workstring using one or more darts or plugs (not shown). The plug 250 may include a bottom layer 253 of cement, a middle layer 252 of sealant, and a top layer 251 of cement. The cement layers 251, 253 may be Portland cement. The bottom layer 253 may fill in the production perforations 65. The plug 250 may be allowed to cure for a predetermined period of time, such as one hour, six hours, twelve hours, or one day. The workstring 210 may then be removed from the wellbore 5. Alternatively, sand may be used as the bottom layer 253 or the bottom layer 253 may be omitted.

Figure 2C illustrates perforation of the production casing 55. A perforation gun 220 may be deployed from the platform 30 using a workstring 215, such as wireline. The perforation gun 220 may be operated to fire projectiles (not shown) or exhaust from shaped charges into the production casing 55, thereby forming perforations 225. The perforations 225 may be located between a top of the production casing cement 60 and a shoe of the surface casing 40. A depth of the top of the cement 60 may vary. Alternatively, a chemical cutter (not shown) or thermite torch may be used to form a window or remove a section of casing. Alternatively, a section mill may be deployed to remove a section of casing.

Figure 2D illustrates running of the workstring 210. The workstring 210 may be redeployed carrying a packer 230 as part of a bottom hole assembly (BHA). The packer 230 may be set just above the perforations 225.

Figure 2E illustrates plugging the production casing annulus by pumping in a multi-layer plug 255. The multi-layer plug 255 may be pumped from the platform 30 through the workstring 210, and into the production casing annulus through the perforations 225. The multi-layer plug 255 may include the middle sealant layer 252 and the top cement layer 251. Instead of a bottom layer 253, the existing production casing cement 60 may be used for a bottom layer. Alternatively, a bottom layer may be pumped in. As shown, the plug 255 may extend from the top of the production casing cement 60 to the mudline 25. Alternatively, the plug 255 may extend only to the surface casing 40 shoe. Alternatively, the plug 255 may be pumped in without using the workstring 210.

Figure 2F illustrates plugging the production casing bore at or just below the mudline 25 by setting a bridge plug 235 and pumping in a multi-layer plug 260 and cutting the completion 1. Once the plug 255 has cured, the workstring 210 may be retrieved from the well bore 5. A bridge plug 235 may be set just below the mudline 25 using a workstring (not shown). The multi-layer plug 260 may then be pumped through the workstring to the bridge plug 235. The multi-layer plug 260 may include the middle sealant layer 252 and the top cement layer 251. The bridge plug 235 may serve as the bottom layer. Once the plug 260 has cured, the workstring may be retrieved from the completion 1 and the casings 10, 40, 55 may be cut using a casing cutter (not shown) deployed from the platform using a workstring. The casings 10, 40, 55 may be cut at or just below the mudline 25, the upper portions salvaged, and the lower portions abandoned with the wellbore 5.

Figures 3A and 3B illustrate operation of the sealant 252 to heal a crack 310 formed in cement 251 due to subsidence.

The sealant 252 may be mixed on the platform 30 and pumped as a liquid or at least substantially a liquid. The cement 251, 253 may also be mixed on the platform 30. The sealant 252 may then cure to become viscoelastic or semisolid. As discussed above, due to subsidence, the cement layer 251 may become damaged 310 after the plug has been pumped and has cured. As formation pressure 305 pushes on the sealant 252, the sealant may viscously flow or deform into the crack 310 until frictional resistance or material stiffness equalizes against the fluid pressure, thereby plugging or healing the cement. The sealant 252 may repeatedly heal the cement 251 over time as the sealant may not degrade over time. The plugs 250, 255, 260 may then reliably contain the formation 50 even in the unstable subsiding completion 1.

Additionally or alternatively, the cured sealant 252 may function as a seal independent from the cement 251, 253 and the cement may serve as a structural retainer to prevent extrusion of the sealant akin to a seal stack used in valves, packers, and/or plugs. Should the sealant lose engagement with the well bore and/or casing due to excessive stress or strain, the sealant may re-engage the casing and/or wellbore after removal of the stress or strain due to adhesive properties of the sealant.

In liquid form, the sealant 252 may include a resin, such as epoxide, a reactive diluent, and a hardener, such as polyamine, so that the sealant cures to form a polymer, such as epoxy. Relative to the resin as one-hundred, the diluent may range from a zero to one-hundred weight ratio, such as ten. The hardener amounts may range from one to one hundred, such as thirty-five. The following working example sealants have been manufactured and tested (ratios by weight): one hundred: thirty: fifteen and one hundred: forty: fifteen - epoxide resin: diluent: hardener.

The sealant 252 may further include solids, such as particulates or fibers, such as barite, silica flour, silica sand, calcium carbonate, manganese dioxide, ferrous oxide, various ground plastics, hollow glass or ceramic microbeads, and various ground rubber. The solids may serve as a weighting agent to increase the density of the sealant, reinforcement to increase mechanical resilience of the sealant, and/or as a bridging agent to prevent loss of sealant into a permeable or fractured formation or cement bottom.

Alternatively, in liquid form, the sealant may include a polymer solution and a crosslinking reagent so that the sealant cures to from a cross-linked polymer gel. The gel may be stiff, viscoelastic, and adhesive. The polymer may be polyacrylamide, polyvinyl alcohol, polyvinyl acetate, guar, or cellulose. The polymer may be synthetic or natural. The crosslinking reagent may be a di or trivalent metal compound, such as chromium carboxylate, zirconium oxychloride, sodium borate, other transition metal salts, aldehydes (such as phenylformadehyde and gluteraldehyde). The diluent may be water. The polymer may range from ten to one hundred lb/barrel, such as seventeen and a half, and the crosslinking reagent can range from one to ten lb/barrel, such as five, for one barrel water.

Alternatively, the sealant 252 may be a composite of the epoxy and the cross-linked polymer gel. The following working example sealant has been manufactured and tested: one to one by volume of a) (ratios by weight): one hundred: ten: twenty-five - epoxide resin: diluent: hardener; and b) eleven lb polyacrylamide and one point two lb crosslinking reagent per bbl of water.

Alternatively, the sealant may be a mud. The mud may be made by mixing oil, such as diesel, with bentonite to form a slurry. The bentonite may be added to substantially increase a density of the slurry, such as to eleven and a half lb/gal. Water or water based mud may then be emulsified with the slurry, thereby allowing the bentonite to hydrate and substantially increasing the gel strength of the mud. The water or water based mud may be added so that the resulting mixture is water or oil based.

Alternatively, the sealant may be made by mixing a calcium chloride solution, such as ten percent concentration, and a sodium silicate solution, such as forty percent concentration. The mixture may cure to form a silicate plug.

Figures 4A-D illustrate a plug and abandon (P&A) operation conducted on the subsided well bore 5, according to another embodiment of the present invention. Figure 4A illustrates milling a section of the production casing 55. The formation 50 may be killed by pumping in a kill fluid (see Figure 2A), such as seawater or mud. The production tubing 70 and packer 85 may be removed from the wellbore 5. The workstring 210 may be deployed carrying a section mill 405 as part of a bottom hole assembly (BHA). The workstring 210 may be deployed from the platform 30 through the production casing bore.

The section mill 405 may include a housing, a piston, a plurality of arms, a piston biasing member, such as a spring. The housing may be tubular and include one or more sections connected by threaded couplings. The upper section may have a threaded coupling, such as a pin, formed at a longitudinal end thereof for connection to the workstring 210. Each arm may be pivoted to the housing for rotation relative to the housing between a retracted position and an extended position. An inner surface of each arm may form a cam. The housing may have a pocket formed through a wall thereof for each arm. Each arm may extend through a respective pocket in the extended position. An outer surface of each arm may form one or more blades. Cutters may be bonded into respective recesses formed along each blade. The cutters may be made from a hard material, such as a ceramic or cermet, such as tungsten carbide. The cutters may be may be pressed or threaded into the recesses. Alternatively, the cutters may be bonded into the recesses, such as by brazing, welding, soldering, or using an adhesive.

The piston may be tubular, disposed in a bore of the housing, and include a shoulder. The piston spring may be disposed between the piston shoulder and a top of one of the housing sections, thereby longitudinally biasing the piston away from the arms. The piston may have a nozzle. To extend the arms, drilling fluid may be pumped through the workstring 210 to the housing bore. The drilling fluid may then continue through the nozzle. Flow restriction through the nozzle may cause pressure loss so that a greater pressure is exerted on the nozzle than on a cammed surface of the piston, thereby longitudinally moving the piston downward toward the arms and against the piston spring. As the piston moves downward, the cammed surface engages the cam surface of each arm, thereby rotating the arms about the pivot to the extended position. The piston may have a flow port formed through a wall thereof corresponding to each arm. The ports may be closed by one of the housing sections in the retracted position and may be in fluid communication with the pocket in the extended position, thereby spraying drilling fluid through the pocket and washing the arms, thereby lubricating the arms and carrying cuttings from the arms.

Once deployed, the section mill 405 may be operated to remove a section of the production casing 55 at a depth corresponding to the production casing cement 60, thereby forming a window 425 providing fluid communication between a bore of the production casing and the open production casing annulus above the cement 60. The section mill 405 may continue until reaching the formation 50 and leave a portion of the production casing 60 lining the formation 50. Alternatively, the section mill 405 may continue to the production casing shoe.

Figure 4B illustrates plugging the formation 50 by pumping in a multi-layer plug 450. Once the production casing has been milled, the workstring 210 may be retrieved to the platform 30, the section mill removed, and the workstring may be redeployed into the well bore. The multi-layer plug 450 may be pumped through the workstring 210 using one or more darts or plugs (not shown). The plug 450 may include a bottom layer 253 of cement, a middle layer 252 of sealant, and a top layer 251 of cement. The bottom layer 253 may fill in the production perforations 65. The plug 450 may be allowed to cure for a predetermined period of time, such as one hour, six hours, twelve hours, or one day. Alternatively, sand may be used as the bottom layer 253 or the bottom layer 253 may be omitted.

Figure 4C illustrates plugging the production casing annulus by pumping in a multi-layer plug 455. Once the plug 450 has cured, the workstring 210 maybe moved above the window 425 and the packer 230 set. The multi-layer plug 455 may be pumped from the platform 30 through the workstring 210, and into the production casing annulus through the window 425. The multi-layer plug 455 may include the middle sealant layer 252 and the top cement layer 251. Instead of a bottom layer 253, the existing production casing cement 60 may be used for a bottom layer. Alternatively, a bottom layer may be pumped in. As shown, the plug 455 may extend from the top of the production casing cement 60 to the mudline 25. Alternatively, the plug 455 may extend only to the surface casing 40 shoe. Alternatively, the plug 455 may be pumped in without using the workstring 210. A residual layer 452 of sealant may be left in the production casing bore.

Figure 4D illustrates plugging the production casing bore at or just below the mudline 25 by setting a bridge plug 235 and pumping in a multi-layer plug 460 and cutting the completion 1. Once the plug 455 has cured, the workstring 210 may be retrieved from the wellbore 5. The bridge plug 235 may be set just below the mudline 25 using a workstring (not shown). The multi-layer plug 460 may then be pumped through the workstring to the bridge plug 235. The multi-layer plug 460 may include the middle sealant layer 252 and the top cement layer 251. The bridge plug 235 may serve as the bottom layer. Once the plug 460 has cured, the workstring may be retrieved from the completion 1 and the casings 10, 40, 55 may be cut using a casing cutter (not shown) deployed from the platform using a workstring. The casings 10, 40, 55 may be cut at or just below the mudline 25, the upper portions salvaged, and the lower portions abandoned with the well bore 5.

Although as shown similar in length, the sealant layer 252 may actually have a length less than or substantially less than the top cement layer 251, such as less than or equal to one-half, one-third, one-fourth, or one-fifth a length of the cement layer 251. The relative length may be controlled by volume of the sealant 252 relative to volume of the cement 251 pumped in the wellbore.

Alternatively, the multi-layer plug may be used to seal a bore and/or annulus of a production liner (not shown) which may have been used to complete the wellbore instead of the production casing 55.

Alternatively, the sealant 252 may be injected into the existing production casing cement 60. This alternative may be especially useful if the top of the production casing cement extends upward proximate to or past the surface casing shoe.

Alternatively, the sealant or multi-layer plugs may be used to repair leaking casing annuluses so that the well bore 5 may be placed back into production. Alternatively, the sealant may be used to repair casing annuluses of non-subsiding formations so that the wellbore may be placed back into formation.

Alternatively, the sealant or multi-layer plug may be installed in the surface casing and/or conductor casing annuluses.

Alternatively, the sealant or multi-layer plug may be used to plug and abandon non-subsiding wellbores, such as wellbores to hydrocarbon-bearing formations, aquifers (subsiding or non-subsiding), or geothermal well bores. Even in non-subsiding well bores, the cement may be subject to cyclic stresses and strains from temperature, pressure, seismic activity, or tectonic activity leading to failure of the cement.

Additionally, the sealant or multi-layer plug may be especially useful for plugging and abandoning or repairing well bores to natural gas formations or wellbores traversing nuisance gas formations, whether subsiding or not, where even minor damage or degradation to the cement may result in leakage.

Figures 5A-D illustrate drilling and completion of a wellbore 500, according to another embodiment of the present invention. Figure 5A illustrates drilling the wellbore 500. As shown, the conductor 10 and surface 40 casings have been cemented 35, 45 in the place. A drilling assembly may be run-into the wellbore 500 from a drilling platform. The drilling assembly may include a drill string 505 and a bottom hole assembly (BHA). The drill string 505 may be made from joints of drill pipe threaded together or coiled tubing. The BHA may include a drill bit 510. The BHA may further include a mud motor (not shown), a measuring-while-drilling (MWD) sub (not shown), a logging-while-drilling (LWD) sub, and/or a steering tool (not shown). The drill bit 510 may be rotated by the mud motor and/or at the surface by a rotary table or top drive. Drilling fluid 515f, such as mud, may be injected through the drill string 505. The drilling fluid 515f may exit into the annulus via ports formed through the drill bit 510 and carry cuttings (collectively returns 515r) from the drill bit to the platform. The cuttings may be separated from the drilling fluid at the platform and the drilling fluid 515f recycled. Once the formation 50 is reached, the drilling assembly may be retrieved from the wellbore 500 to the platform.

Figure 5B illustrates a production casing assembly deployed into the wellbore 500. The production casing assembly may include the production casing string 55 and a BHA. The casing string 55 may include joints of casing threaded together. Centralizers 558 may be spaced along the casing string 55 and/or the BHA. The BHA may include a casing shoe 556 and a float collar 557. The float collar 557 may include a check valve, such as a flapper, and a shoulder for receiving a wiper plug 520. After the casing assembly has been run-into the well bore 500, a cementing head (not shown) may be connected to the casing string 55 at the platform. The cementing head may include valves and one or more wiper plugs, such as a top plug 525 and a bottom plug 520. The cementing head may then be connected to a cement pump (not shown). Drilling fluid 515f may then be circulated to clean the well bore (not shown).

Figure 5C illustrates pumping of a multi-layer plug 550. The bottom plug 520 may be released from the cementing head. A preflush or spacer (not shown) may be pumped through the cementing head behind the bottom plug 520. The top cement layer 251 may then be pumped behind the spacer. The sealant 252 may then be pumped behind the top cement layer 251. The bottom layer 253 of cement may then be pumped behind the sealant 252. Once the bottom layer 253 has been pumped, the top plug 525 may be released from the cementing head. A propellant 530, such as mud, may then be pumped behind the top plug 525 thereby propelling the multi-layer plug 550 through the production casing 55. The propellant 530 may be lighter than the drilling fluid 515f so as to maintain the casing 55 in compression as the multi-layer plug 550 cures. The casing 55 may be rotated and/or reciprocated as the multi-layer plug 550 is being pumped.

Figure 5D illustrates the multi-layer plug 550 pumped into the production casing annulus. Once the bottom plug 520 reaches the float collar 557, a diaphragm in the bottom plug 520 may rupture. The spacer and multi-layer plug 550 may then flow through the bottom plug 520 and into the annulus, thereby displacing the drilling fluid present there. The top plug 525 may continue through the production casing 55 until reaching the bottom plug 520, thereby providing a pressure increase detectable at the drilling platform. The cement pump may then be shut down and pressure released from the cementing head. The check valve in the float collar 557 may then close, thereby preventing back-flow of the multi-layer plug 550 from the annulus. Once the multi-layer plug 550 cures, the float collar 557, guide shoe 556, and any residual cement may be drilled out (not shown) and the casing 55 perforated for production.

Alternatively, two or more multi-layer plugs may be pumped in the production casing annulus using a two or more stage cementing operation. One or more stage valves (not shown) may be disposed along the casing, such as at a mid-point of the casing or above a weak formation. The stage valve may be operated by additional wiper plugs configured to engage and open or close the stage valve.

Alternatively, the well bore may be completed with production liner (not shown) instead of production casing and the multi-layer plug may be used to seal the liner annulus.

Additionally, the conductor and/or surface casings annuluses may be sealed using the multi-layer plug instead of cement.

Alternatively, the multi-layer plug may be used in primary or secondary cementing operations of land-based well bores and/or sub-sea type completions.

While the foregoing is directed to embodiments of the present invention, other and further embodiments of the invention may be devised without departing from the basic scope thereof, and the scope thereof is determined by the claims that follow.

## Claims

1. A method of completing or abandoning a wellbore, comprising:
mixing sealant;
mixing cement;
pumping the cement and sealant into the wellbore, wherein:
the cement is above the sealant, and
the sealant cures to become viscoelastic or semisolid.

2. The method of claim 1, wherein the cement and sealant are pumped into a bore of a casing or liner.

3. The method of claim 2, further comprising pumping the cement and sealant into an annulus formed between the casing or liner and the wellbore.

4. The method of claim 3, further comprising at least one of:
perforating a wall of the casing or liner, wherein the cement and sealant are pumped through the perforations;
section milling a window along the casing or liner, wherein the cement and sealant are pumped through the window; or
setting a bridge plug in the casing bore and pumping the cement and sealant onto the bridge plug and preferably, cutting the casing string at or just below a seafloor.

5. The method of one of the claims 2 to 4, wherein the sealant is pumped in the annulus between two layers of cement.

6. The method of one of the preceding claims, wherein the cement and sealant are pumped into an annulus formed between the casing or liner and the wellbore.

7. The method of claim 6, wherein the sealant is pumped in the annulus between two layers of cement.

8. The method of claim 6 or 7, further comprising:
deploying the casing or liner into the well bore; and
preferably, drilling the wellbore.

9. The method of one of the preceding claims, wherein the sealant cures to become a cross-linked polymer gel.

10. The method of claim 9, wherein the gel cures to become an epoxy.

11. The method of one of the preceding claims, wherein the sealant cures to become a composite comprising epoxy and a cross-linked polymer gel.

12. The method of one of the preceding claims, wherein the sealant cures to become viscoelastic.

13. A plug for completing or abandoning a well bore, comprising:
a top layer comprising cement, in particular Portland cement; and
a middle or bottom layer comprising a viscoelastic or semisolid sealant.

14. The plug of claim 13, further comprising a bottom layer comprising Portland cement.

15. A method for repairing damaged cement in a wellbore, comprising:
forming an opening through a wall of a casing or liner cemented in the wellbore; and
pumping sealant through the opening and into the damaged cement,
wherein the sealant cures to become viscoelastic or semisolid.
